# EUROPEAN PATENT APPLICATION

(11) **EP 1 894 983 A1**
(43) Date of publication of application: **05.03.2008**
(21) Application number: 06119978.2
(22) Date of filing: 01.09.2006
(51) Int. Cl.: C09K 3/14, B24D 3/00

(54) **Granules for use in abrading or cutting tools production**

(71) Applicant: Sheridan, Cedric, 7423 Dondelange (LU)
(72) Inventor: Sheridan, Cedric, 7423 Dondelange (LU)
(74) Representative: Beissel, Jean

(57) **Abstract**

A granule for use in the production of abrading or cutting tools comprises a single abrasive grain surrounded with a sinterable particulate mass, which comprises particles of sinterable material (e.g. fused tungsten carbide powder), binding agent and solvent for the binding agent. The binding agent dissolved by the solvent is of colloidal consistency.

## Description

### Technical field

The present invention generally relates to articles for use in the field of abrading or cutting tools, in particular to granules comprising abrasive grains surrounded with sinterable material.

### Background Art

Tools for cutting and/or abrading are conventionally fabricated of a suitable matrix material with minute abrasive grains, such as diamonds, embedded within the matrix material. Basically, such tools are formed by conventional powder metallurgical techniques, wherein the abrasive grains are initially mixed with the matrix material (e.g. metals, alloys, metal carbides etc., as well as mixtures thereof) in powder form and some binding agent, after which the mixture press-moulded to bond and shape the mixture into the desired tool. In the so-called hot-pressing method, the mixture is placed in a mould having the shape of the abrasive tool to be formed and pressed at high pressure and temperature to cause sintering of the sinterable material. According to the "cold press and sinter" technique, the mixture is first pressed at high pressure into the desired tool shape and thereafter fired at high temperature in a furnace to sinter the tool. Tools fabricated in this manner are commonly referred to as metal-bonded abrading or cutting tools

Efficiency and lifetime of an abrading or cutting tool are among others determined by the degree of uniformity of the distribution of the abrasive grains on the surface or volume of the tool and by the retention strength of the abrasive grains within the surrounding matrix material. The difficulty of uniformly distributing abrasive particles throughout the matrix material was first overcome by the method taught in US patent 3,779,726. This document proposes to tumble the abrasive grains in the presence of a powder of sinterable material and binding agent while controlled amounts of water are simultaneously sprayed thereon. In this way, each abrasive particle is singularly coated with a sinterable particulate mass in such a way that granules, so-called "pellets", are formed. These pellets are subsequently pressed into the desired shape at high pressure (35 tons per square inch, i.e. approximately 5000 atmospheres). A different method for individually coating abrasive grains is disclosed in US patent 4,770,907. This method commences with the preparation of a slurry of a selected metal powder with a binding agent dissolved in an organic solvent in predetermined relative concentrations. The abrasive grain cores are then fluidized in a work vessel and the slurry is sprayed onto the abrasive grains cores during fluidization, whereby a generally uniform coating of the slurry builds and dries on each abrasive grain.

Although the known methods enable manufacturing of individually coated abrasive grains, there are shortcomings of the known pellets or granules as concerns handling and usability.

### Technical problem

It is an object of the present invention to provide an article comprising abrasive grains surrounded with a sinterable particulate mass with improved handling and usability properties.

This object is achieved by a granule as claimed in claim 1.

### General Description of the Invention

A granule for use in the production of abrasive or cutting tools comprises a single abrasive grain surrounded with a sinterable particulate mass, which comprises particles of sinterable material (e.g. fused tungsten carbide powder, sintered tungsten carbide cobalt or any other suitable sinterable material), binding agent and solvent for the binding agent. According to an important aspect of the invention, the binding agent dissolved by the solvent is of colloidal consistency. As will be appreciated, the dissolved binding agent renders the granule malleable. The terms "plasticity", "malleability" and "malleable" are used, in the context of the present disclosure to designate a consistency corresponding approximately to that of modelling clay, which facilitates the manufacture of abrasive tools. For instance, after the granules have been introduced into a mould, they can be pressed together by relatively small amounts of pressure so that they are preliminarily fixed with respect to the mould. It is thus ascertained that the abrasive particles remain in place when additional matrix material is poured into the mould and when the mixture is sintered.

Granules as described above are preferably made in a mixing container, such as e.g. a mixing drum, a mixing bowl or a fluidised bed apparatus, into which the abrasive grains are introduced. Particles of sinterable material and particles of binding agent along with a quantity of solvent for the binding agent are then progressively introduced into the mixing container and mixed with the abrasive grains. The rates at which the different components are added to the mixture are controlled in such a way that the abrasive grains are singularly coated with the particles of sinterable material and the dissolved binding agent. Particularly the addition of the particles of sinterable material has to occur at a rate that is sufficiently low so that they do not adhere on themselves but rather on the abrasive grains. In certain cases, the particles of sinterable material and the particles of binding agent powder are advantageously mixed in the desired proportions prior to introduction into the mixing container.

According to a preferred embodiment of the invention, the binding agent comprises a cellulose ether, e.g. methylcellulose and/or ethylcellulose. The solvent for the binding agent preferably comprises an organic solvent. Glycerol formal is presently regarded as particularly suited solvent, e.g. with methylcellulose and/or ethylcellulose as binding agent. These combinations have several interesting advantages. First, methylcellulose or ethylcellulose are rapidly dissolved in glycerol formal. The use of such a powerful solvent for the binding agent is highly preferred as this reduces the risk of formation of aggregates of particles of partially dissolved binding agent in the mixture. Second, the dissolution of the binding agent is very strong at room temperatures, which means that heating of the mixing container is not necessary. Third, the combinations of these components are chemically inert with respect to the particles of sinterable material and the abrasive particles. In particular, the solvent and the binding agent are advantageously substantially water-free, as the presence of water in the mixture could cause oxidation of metallic particles. Glycerol formal has furthermore the advantage of an elevated boiling point (191-195°C at normal atmospheric pressure), which is a highly preferred property of a solvent for the binding agent. Consequently, at room temperature, glycerol formal is much less volatile than for instance ethanol. The low volatility of the solvent ascertains that the malleability of the granules is stable in time and that such granules can be stored substantially longer than conventional granules without drying and becoming brittle. This property is especially appreciated if the granules have to be shipped to a distant location before they are further processed, i.e. shaped into a green and sintered. Furthermore, even if the container with the granules is inadvertently left open for some time, the risk that the granules will be unusable is considerably reduced. As will moreover be noted, the binding agent/solvent combination is preferably chosen so that they completely vanish during the high-temperature treatment substantially without leaving any organic residue behind in the matrix. Methylcellulose, ethylcellulose and glycerol formal evaporate easily at temperatures above 500-600°C.

The abrasive grains of the granules can e.g. be diamonds (natural or synthetic ones). The diamonds may have a coating, e.g. provided in a CVD (chemical vapour deposition) step, which can achieve higher retention strength in the matrix material. According to a preferred embodiment of the invention, the abrasive grain comprises a diamond surrounded with a sintered or fused coating. In particular, such an abrasive grain may be obtained by subjecting diamonds (CVD-coated or not) to a treatment as described above, thereby providing granules, which are subsequently heat-treated so as to harden the coating. These heat-treated granules are then used as abrasive grains in a further coating step. Such granules are thus provided with a hard inner coating and a malleable outer coating. The malleable outer coating provides for eased handling of the encapsulated diamonds in the production of a tool, whereas the hard inner coating provides for enhanced retention of the diamonds in the matrix of sintered material. Additionally, the hard inner coating ensures that after pressing the granules into the mould, the abrasive grains remain spaced from one another by a distance of at least twice the thickness of the inner coatings, which favours a still more homogeneous distribution of the abrasive grains in the matrix. It should not be forgotten either that, during the pressing of the green, the inner coating prevents the abrasive grains from coming into direct contact with the mould and cause scratches.

According to another aspect of the present invention, a sinterable particulate paste for the production of abrading or cutting tools, comprising abrasive grains, is proposed as an alternative to the granules. The sinterable particulate paste comprises particles of sinterable material (e.g. fused tungsten carbide powder, sintered tungsten carbide cobalt or any other suitable sinterable material), binding agent and solvent for the binding agent. The binding agent preferably comprises a cellulose ether, most preferably methylcellulose and/or ethylcellulose. The solvent for the binding agent preferably comprises an organic solvent, most preferably glycerol formal. The consistency of the paste can vary depending on the proportions of the binding agent and the solvent. The advantages of the choice of methylcellulose and/or ethylcellulose as binding agent and glycerol formal as solvent are generally those mentioned above with respect to the granules: (a) rapid dissolution of the binding agent at room temperatures, (b) chemical inertness with respect to the particles of sinterable material and the abrasive particles, in particular no oxidation of metallic particles, (c) lasting consistency of the paste due to the low volatility of the solvent, (d) residue-free vanishing of the binding agent/solvent during the high-temperature treatment. It should be noted that also in the case of a sinterable particulate paste, the abrasive grains may e.g. be CVD-coated or uncoated diamonds (natural or synthetic ones). Most preferably, however, the abrasive grain comprises a diamond surrounded with a sintered or fused coating, which ensures that the abrasive grains remain spaced from one another within the paste by a distance of at least twice the thickness of the inner coatings.

Fabrication of a paste of sinterable material containing abrasive grains may be achieved in a simpler way than the production of malleable granules. According to a preferred method for obtaining the sinterable paste, one mixes the abrasive grains, the particles of sinterable material and the binding agent in the relative proportions and adds to the so-formed mixture an amount of solvent until the desired consistency of the paste is reached.

While the present patent application primarily concerns granules or a method for forming such granules as defined in the claims attached hereto, the person skilled in the art will readily understand that in particular the paste of sinterable particulate paste, preferred embodiments of said paste or the method for producing said paste could e.g. be claimed as subject matter of amended claims in the present application or as subject matter of claims in divisional and/or continuation applications.

### Brief Description of the Drawings

Further details and advantages of the present invention will be apparent from the following detailed description of not limiting embodiments with reference to the attached drawings, wherein:
Fig. 1 is a cross sectional view of a granule with a diamond core and a malleable coating of sinterable material;
Fig. 2 is a schematic illustration of the production of granules according to the invention;
Fig. 3 is a cross sectional view of a granule with a diamond core, a sintered inner coating and a malleable outer coating.

### Description of Preferred Embodiments

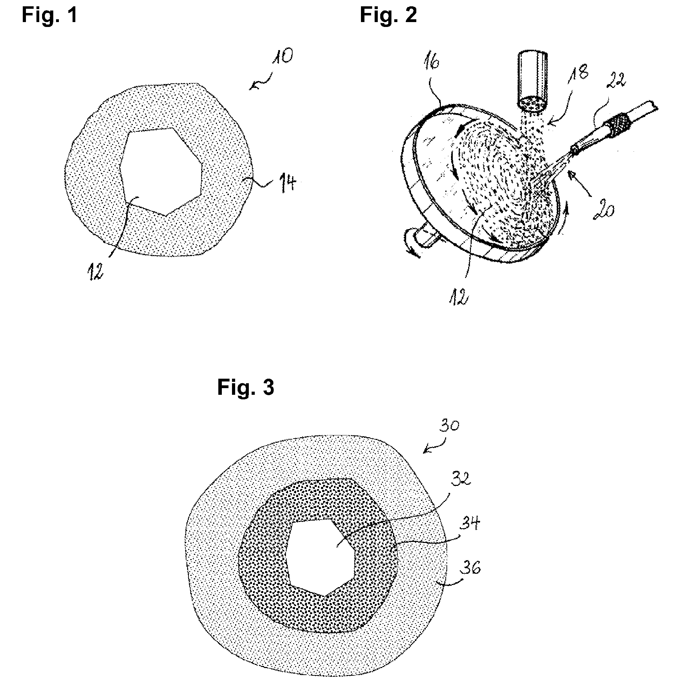

Fig. 1 schematically shows a granule 10 with a diamond 12 surrounded with a malleable sinterable particulate mass 14. Granules 10 are e.g. produced as illustrated with respect to Fig. 2. The diamonds 12, having particle sizes preferably above 180 µm, are fed into a rotary mixing container 16. The amount of diamonds 12 and the rotational speed of the mixing container 16 are chosen such that the diamonds 12 roll on themselves under the action of gravity. A mixture 18 of a powder of sinterable material and binding agent is progressively sifted onto the diamonds 12, while a fine spray 20 of solvent for the binding agent is directed thereto by nozzle 22. The binding agent and the corresponding solvent are chosen so that wetting the powder of binding agent with the solvent yields a colloidal substance.

According to a first illustrative example, the powder of sinterable material consists of 30% by weight of CuMn powder and 70% by weight of fused tungsten carbide. The grain size of the CuMn and the fused tungsten particles may e.g. range from 0.8 µm to 250 µm and even higher.

According to a second illustrative example, the powder of sinterable material consists of 50% by weight of fused tungsten carbide (particle size below 45 µm), 25% by weight of cobalt powder (particle size below 10 µm), 5% by weight of nickel powder (particle size below 10 µm) and 20% by weight of CuMn or bronze powder (particle size below 60 µm).

According to a third illustrative example, the powder of sinterable material consists of 30% by weight of iron powder (particle size approximately 12 µm?), 25% by weight of cobalite™ (pre-alloy made of 10% Co / 20% Cu /70% Fe, (particle size below 20 µm)) powder, 25% by weight of irregular bronze powder (grade 85/15, particle size below 45 µm) and 20% by weight of nickel powder (particle size below 10 µm).

In any of the three examples above, methylcellulose or ethylcellulose powder (particle size below 500 µm) is used as binding agent and glycerol formal as solvent. For the production of the malleable granules, the weight ratio of cellulose ether to sinterable material ranges from about 0.5 to 6%. The proportion of glycerol formal with respect to the cellulose ether determines the degree of plasticity of the granules. It should be noted that by adding to the mixture a higher amount of cellulose ether (e.g. between 10 and 20% of the weight of the sinterable powder), and correspondingly a higher amount of solvent, one obtains a paste rather than individual granules. Depending on the application, the use of such a paste, in particular a paste comprising abrasive grains with a hard coating, might even be preferred over the use of granules. In particular, the paste can be made very sticky so that is shows very good adhesion to a mould, e.g. a graphite mould.

During the mixing process, the rate of addition of solvent is kept low enough so that the diamonds do not adhere to each other. The rate of addition of the powder mixture of sinterable particles and binding agent is kept low enough so that the particles of sinterable material do not agglomerate on themselves but rather on the diamonds.

Fig. 3 shows an example of a granule 30 with a diamond core 32, a hard inner coating 34 and a malleable outer coating 36. The outer coating 36 is applied in a method as discussed with respect to Fig. 2, except that one uses previously coated diamond particles as seeds on which accumulates the malleable particulate mass. The thicknesses of the different coatings 34, 36 may be chosen according to the desired application: the thickness of the inner coating 34 typically lies between 15 and 200 µm, the thickness of the outer coating 36 between 15 µm and 3 mm.

The inner coating 34 may be applied by any suitable method. However, it is considered particularly advantageous if encapsulation of diamonds 32 in respective inner coatings 34 is achieved by producing granules using the method described with reference to Fig. 2 and subsequently sintering these granules to harden the coating. The powder of sinterable material chosen for the two coatings 34, 36 may be the same, so that compatibility issues are eliminated. Alternatively, the inner coatings 34 of the double-coated diamond-core granules 30 may be produced using some other binding agent/solvent combination that is compatible with the intended outer coating. For instance, for the inner coating one could use one of the mixtures disclosed in US 3,316,073 e.g. with dextrin as binding agent water as solvent. After applying the inner coating layer 34 onto the diamond 32, the inner coating layer 34 is dried and sintered. The outer coating layer 36 is then applied onto the hardened inner coating 34.

## Claims

1. A granule for use in the production of abrading or cutting tools, comprising a single abrasive grain surrounded with a sinterable particulate mass; said sinterable particulate mass comprising particles of sinterable material, binding agent and solvent for said binding agent,
**characterized in that** said binding agent dissolved by said solvent is of colloidal consistency.

2. The granule as claimed in claim 1, wherein said binding agent comprises a cellulose ether.

3. The granule as claimed in claim 2, wherein said binding agent comprises methylcellulose and/or ethylcellulose.

4. The granule as claimed in any one of claims 1 to 3, wherein said solvent comprises an organic solvent.

5. The granule as claimed in any one of claims 1 to 4, wherein said solvent comprises glycerol formal.

6. The granule as claimed in any one of claims 1 to 5, wherein said particles of sinterable material include fused tungsten carbide particles.

7. The granule as claimed in any one of claims 1 to 6, wherein said abrasive grain is a diamond.

8. The granule as claimed in any one of claims 1 to 7, wherein said abrasive grain comprises a diamond surrounded with a sintered or fused coating.

9. A process of forming granules as claimed in any one of claims 1 to 8, comprising
providing a mixing container and introducing abrasive grains into said mixing container;
progressively introducing particles of sinterable material and particles of binding agent along with a quantity of solvent for said binding agent into said mixing container in such a way that that said abrasive grains are singularly coated with said particles of sinterable material and said dissolved binding agent.

10. The process as claimed in claim 9, wherein said particles of sinterable material and said particles of binding agent powder are mixed prior to introduction into said mixing container.
